# EUROPÄISCHE PATENTSCHRIFT

(11) **EP 1 184 276 B1**
(45) Veröffentlichungstag und Bekanntmachung des Hinweises auf die Patenterteilung: **17.11.2004**
(21) Anmeldenummer: 01119496.6
(22) Anmeldetag: 14.08.2001
(51) Int. Cl.: B62L 1/00, B62L 5/00

(54) **Bremseinrichtung für ein Fahrrad**
Bicycle brake device
Dispositif de freinage pour bicyclette

(30) Priorität: 01.09.2000 DE 10043005
(43) Veröffentlichungstag der Anmeldung: 06.03.2002
(73) Patentinhaber: SRAM Deutschland GmbH, 97404 Schweinfurt (DE)
(72) Erfinder: Schmidt, Frank, 97422 Schweinfurt (DE)
(74) Vertreter: Jordan, Volker, Dr.

(56) Entgegenhaltungen:
- EP-A- 0 688 713
- DE-A- 2 522 622
- DE-A- 19 536 157
- DE-U- 29 908 498
- US-A- 5 673 773

## Beschreibung

Die Erfindung bezieht sich auf ein Fahrzeug nach dem Oberbegriff des Anspruchs 1, sowie auf ein Verfahren nach den Oberbegriff des Anspruchs 11.

Der Anbau einer Trommelbremse an das Rahmenteil des Fahrrades erfolgt üblicherweise nach ihrem Zusammenbau mit einer Nabe durch die Befestigung deren Achse am Rahmenteil des Fahrrades, wobei ein Ausleger zur Ableitung von Bremsreaktionskräften ebenfalls am Rahmenteil befestigt wird, nachdem der Ausleger in die richtige Position zum Rahmenteil gebracht worden ist. Ein Beispiel für die vorbeschriebene Ausführung einer Trommelbremse mit einem Ausleger ist in der deutschen Patentanmeldung DE 195 36 157.1 A1 beschrieben. Hier weist der Ausleger ein Auflager auf, das mittels einer Verschraubung am Rahmenteil des Fahrrades befestigt wird oder eine Klammer o.ä. aufweist, die mit dem Rahmenteil gefügt werden kann. Immer ist es das Ziel einer solchen Konstruktion, einen für den Anbau an allen Rahmenteilen geeigneten Ausleger zu schaffen, der zudem möglichst auch an beiden Laufrädern des Fahrrades anbaubar ist

Die DE 25 22 622, auf der die Oberbegriff der Ansprüche 1 und 11 beruhen, offenbart eine Bremsvorrichtung, die über eine Bremsträgerplatte (21), ein Befestigungsglied (31), einen Ausleger (5), ein Rahmenteil (30) und ein Ausfallende verfügt. Der Auslegers (5) und das Befestigungsglied (31) werden vermittels eines zumindest implizit der DE 25 22 622 A1 entnehmbaren Verbindungsteils, wohl eine Schrauben-Mutter-Kombination, verbunden, so dass eine beim Bremsen auftretende Bremsreaktionskraft von der Bremsträgerplatte (21) über den Ausleger (5) und das Befestigungsglied (31) auf das Rahmenteil (30) übertragbar ist.

Die Montage der bekannten Bremseinrichtung muss offensichtlich wie folgt erfolgen: In einem ersten Schritt werden die Bremsträgerplatte und der Ausleger zusammen mit der Nabe und der Achse in die Ausfallenden des Rahmenteils eingeschoben. Anschließend muss der Ausleger gegenüber einer der Öffnungen des Befestigungsgliedes so ausgerichtet werden, dass das Langloch des Auslegers sich mit einer der Öffnungen des Befestigungsglieds überdeckt und eine gemeinsame Öffnung bildet, um eine Schraube der Schrauben-Mutter-Kombination einzuführen. Nachdem der Ausleger in dieser Weise ausgerichtet wurde, und eine Schraube in die vom Langloch des Auslegers und von einer Öffnung des Befestigungsgliedes gebildete gemeinsame Öffnung eingeführt wurde, wird die zur Bremskraftübertragung erforderliche Befestigung durch das Verschrauben der Schrauben-Mutter-Kombination fertiggestellt.

Demgegenüber ist es eine Aufgabe der vorliegenden Erfindung, dass die montagetechnisch anspruchsvolle Positionierung des Auslegers gegenüber dem Befestigungsglied entfallen kann.

Zur Lösung dieser Aufgabe schlägt die Erfindung das Fahrzeug mit den Merkmalen des Anspruchs 1 vor. Ferner stellt die Erfindung in diesem Zusammenhang das Verfahren mit den Merkmalen des Anspruchs 11 bereit.

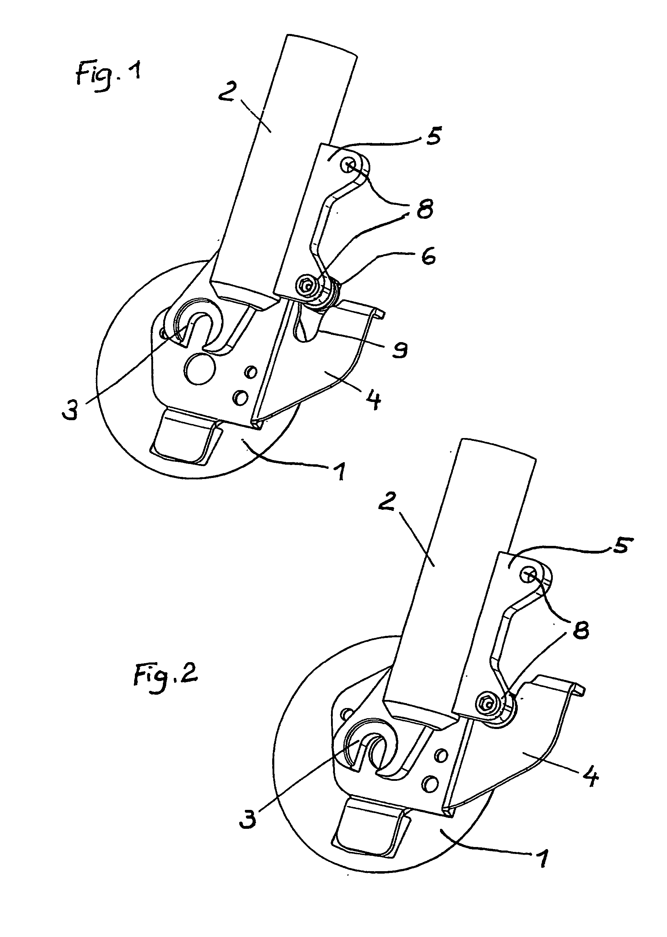

Erfindungsgemäß ist zum Verbinden des Auslegers (4) mit dem Befestigungsglied (5) als Verbindungsteil ein am Befestigungsglied (5) angebrachter oder anzubringender Adapter (6) vorgesehen. Der Adapter ist derart ausgelegt, dass durch Einschieben der Achse in das Ausfallende (3) im Zuge der Montage des Laufrads am Rahmenteil (2) der Adapter (6) mit dem Ausleger (4) in die Bremsreaktionskraftübertragungsverbindung herstellenden Eingriff gebracht oder bringbar ist. Es kann also nach der Erfindung, durch Verwendung des Adapters, der Eingriff, der die Bremsreaktionskraftübertragungsverbindung herstellt, durch Einschieben der Achse in das Ausfallende hergestellt werden, und zwar im Zuge der Montage des Laufrads am Rahmenteil. Wie die Fig. 1 und 2 zum Ausführungsbeispiel deutlich machen, kann - bezogen auf das Ausführungsbeispiel - gleichzeitig einerseits die Achse in das Ausfallende des Rahmenteils eingeschoben und andererseits die Ausnehmung im Ausleger dem Adapter gewissermaßen "übergeschoben" werden. Zusätzliche Positionierungs-, Ausrichtungs- und Befestigungsmaßnahmen, die nach dem Stand der Technik erforderlich sind, sind nach der Erfindung damit nicht mehr nötig.

Bevorzugt Ausgestaltungen des erfindungsgemäßen Fahrzeug (insbesondere ein Fahrrad) und des erfindungsgemäßen Verfahrens ergeben sich aus den Ansprüchen 2 bis 20 bzw. 12 bis 22.

Der Gegenstand der vorliegenden Erfindung bezieht sich insbesondere auf einen Fahrradtyp, der ganz auf einen speziellen Bremseinrichtungstyp abgestellt ist. Es handelt sich um das Segment von Fahrrädern, an denen an beiden Laufrädern, zumindest aber am Vorderrad eine Scheibenbremse montiert ist.

Diese Fahrradgattung in der Erstausrüstung oder zumindest in der Nachrüstung mit Trommelbremsen auszurüsten, wird durch die vorliegende Erfindung ermöglicht, wobei die montagetechnisch anspruchsvolle Positionierung des Auslegers gegenüber dem Rahmenteil vor dem Befestigen der Achse der Nabe in den Ausfallenden des Fahrrades entfallen kann.

Die Hersteller von Fahrrädern mit Scheibenbremsen sind inzwischen allgemein dazu übergegangen, die beim Bremsen erzeugte Reaktionskraft auf ein Befestigungsglied abzuleiten, welches am Rahmenteil in der Nähe eines der Ausfallenden angeordnet ist. Dieses Befestigungsglied besteht aus einem Blech mit zwei Bohrungen, an denen ein Bremssattel befestigbar ist, welcher Bremsklötze aufweist, die gegen eine mit dem Laufrad verschraubte Bremsscheibe gepresst werden. Beim Abbremsen der Bremsscheibe und somit des Laufrades wird die Bremsreaktionskraft von den Bremsklötzen über den Bremssattel auf das Befestigungsglied und somit auf das Rahmenteil übertragen.

Zum Nachrüsten einer Trommelbremse an einem für Scheibenbremsen ausgelegten Fahrrad wird ein Adapter an einer der Bohrungen des Befestigungsgliedes angebracht, der vorzugsweise ein einfach herstellbares rotationssymmetrisches Teil ist und eine Nut aufweist, in welche sich eine Ausnehmung eines Auslegers an der Trommelbremse einfügen lässt.

Bekanntermaßen wird die Bremseinrichtung, bestehend aus einem Bremsträger mit Bremsbacken und einem Ausleger, mit einer Nabe mit einer Achse zu einer Baueinheit zusammengebracht, wobei sich diese Baueinheit sowohl über das Einschieben der Achse in Ausfallenden am Rahmenteit des Fahrrades wie auch über das gleichzeitige Einschieben des Auslegers in den Adapter am Befestigungsteil des Fahrrades befestigen lässt. Die Montage bzw. die Demontage des Laufrades reduziert sich somit auf das vorbeschriebene Einschieben und zusätzlich auf das Anziehen von Achsmuttem auf der Achse. An der Fügeverbindung des Auslegers mit dem Adapter werden keine zusätzlichen Befestigungsoperationen mehr erforderlich. Es hat sich als vorteilhaft erwiesen, die Ausnehmung am Ausleger trichterförmig verengt zu gestalten, um die Fügestelle zwischen dem Ausleger und dem Adapter nahezu spielfrei zu gestalten. Unnötig zu sagen, dass hier wie an allen Bremsen eine Fernbedienung zur Betätigung der Bremseinrichtung angebracht werden muß.

Anhand mehrerer Zeichnungen wird ein Ausführungsbeispiel einer Bremseinrichtung einer Trommelbremse zur Befestigung an einem Rahmenteil mit einem Befestigungsglied für Ausleger von Scheibenbremsen erläutert. Es zeigen:
- Fig. 1: eine Bremsträgerplatte einer Trommelbremse mit einem Ausleger in einer Montageposition vor einem Rahmenteil mit einem Befestigungsglied und einem Adapter,
- Fig. 2: die vorgenannten Bauelemente in der entgültigen Montageposition;
- Fig. 3: die Fügestellung des Auslegers mit dem Adapter am Befestigungsglied in perspektivischer Darstellung.

Wird mit 1 eine Bremsträgerplatte einer Bremseinrichtung beschrieben, so weist diese als Bestandteil einer Trommelbremse einen Ausleger 4 auf, der zur Ableitung von Bremsreaktionskräften auf ein Rahmenteil 2 eine Ausnehmung 9 aufweist, die mit einem Adapter 6 an einem Befestigungsglied 5 fügbar ist. Die Ausnehmung 9 passt in eine Führung 5 des Adapters 6, wobei dieser aus einem rotationssymmetrischen Teil bestehen kann, was die Anordnung der Führung 7 insofern vereinfacht, als diese aus einer einfachen Nut bestehen kann, die entweder spanend, oder spanlos einarbeitbar ist.

Während die Figur 1 die Position der Bremsträgerplatte 1 zu dem Rahmenteil 2 vor der endgültigen Montage beschreibt, zeigt die Figur 2 die Bremsträgerplatte 1 und somit die Bremseinrichtung in Verbindung mit einer Nabe in der endgültigen Montageposition. Eine in diesen Figuren nicht gezeigte Achse der Nabe ragt durch eine Zentralbohrung der Bremsträgerplatte 1 hindurch und lässt sich in Ausfallenden 3 des Rahmenteils 2 einschieben, was gemäß Figur 2 geschehen ist. Gleichzeitig hat sich bei richtiger Handhabung die Ausnehmung 9 in die Führung 7 des Adapters eingefügt.

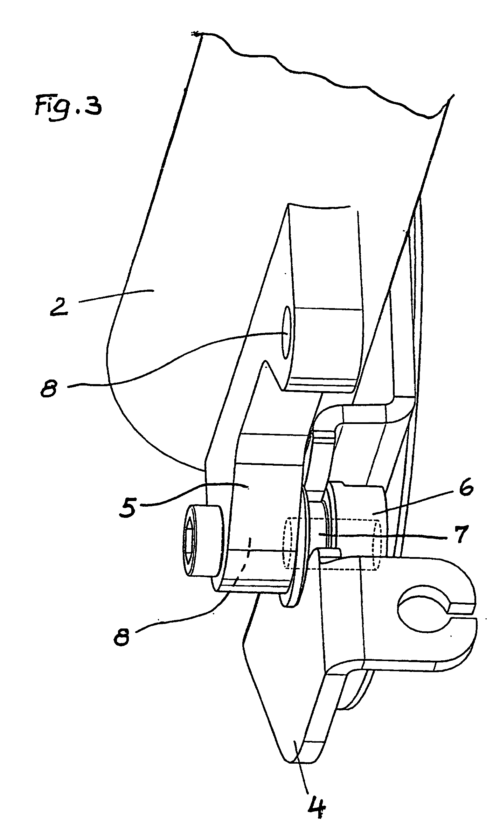

Das Befestigungsglied 5 ist als Blechteil mit dem Rahmenteil 2 verschweißt und weist zwei Bohrungen 8 auf, die der Befestigung eines Bremssattels für Schebenbremsen dienen. Gemäß Figur 3 ist erkennbar, dass der Adapter 6 an einer der zwei Bohrungen 8 verschraubt ist, und wie sich die Ausnehmung 9 in die als Nut ausgeführte Führung 7 eingeschoben hat. Das Bremsreaktionsmoment beim Bremsen kann nunmehr auf das Rahmenteil 2 übertragen werden, sofern die Nabe mit der Bremseinrichtung als Baueinheit über Achsmuttern mit dem Rahmenteil 2 an den Ausfallenden 3 des Rahmenteils 2 verschraubt worden ist.

Der Vorteil der Erfindung liegt in der Austauschbarkeit von Laufrädern mit Bremsscheiben für Scheibenbremsen und solchen mit Trommelbremsen; ferner in der vereinfachten Montage der Laufräder mit einer Trommelbremse, die der von Laufrädern mit Bremsscheiben ohne Ausleger sehr nahe kommt.

## Patentansprüche

1. Fahrzeug, insbesondere Fahrrad, mit einer einem Laufrad des Fahrzeugs zugeordneten Bremseinrichtung,
wobei eine Nabe des Laufrads zusammen mit der Bremseinrichtung über eine Achse an einem Ausfallende (3) eines Rahmenteils (2) des Fahrzeugs befestigt oder befestigbar ist,
wobei an einer Bremsträgerplatte (1) der Bremseinrichtung ein Ausleger (4) angeordnet ist, der vermittels eines Verbindungsteils mit einem Befestigungsglied (5) am Rahmenteil (2) derart verbunden oder verbindbar ist, dass eine beim Bremsen auftretende Bremsreaktionskraft von der Bremsträgerplatte (1) über den Ausleger (4) und das Befestigungsglied (5) auf das Rahmenteil (2) übertragbar ist,
**dadurch gekennzeichnet,**
**dass** zum Verbinden des Auslegers (4) mit dem Befestigungsglied (5) als Verbindungsteil ein am Befestigungsglied (5) angebrachter oder anzubringender Adapter (6) vorgesehen ist, der derart ausgelegt ist, dass durch Einschieben der Achse in das Ausfallende (3) im Zuge der Montage des Laufrads am Rahmenteil (2) der Adapter (6) mit dem Ausleger (4) in die Bremsreaktionskraftübertragungsverbindung herstellenden Eingriff gebracht oder bringbar ist.

2. Fahrzeug mit Bremseinrichtung nach Anspruch 1,
**dadurch gekennzeichnet,**
**dass** der Adapter (6) an mindestens einer Bohrung (8) des Befestigungsgliedes (5) angeordnet ist, das zur Befestigung eines Bremssattels einer Scheibenbremse geeignet ist

3. Fahrzeug mit Bremseinrichtung nach Anspruch 2,
**dadurch gekennzeichnet,**
**dass** das Befestigungsglied (5) zwei Bohrungen (8) aufweist, und
**dass** der Adapter (6) an der dem Ausfallende (3) näher gelegenen Bohrung (8) des Befestigungsgliedes (5) angeordnet ist.

4. Fahrzeug mit Bremseinrichtung nach einem der vorhergehenden Ansprüche,
**dadurch gekennzeichnet,**
**dass** der Ausleger (4) eine in ihrer Form dem Adapter (6) angepasste Ausnehmung (9) mit einer Einführöffnung aufweist,
wobei der Adapter zur formschlüssigen Herstellung der Bremsreaktionskraftübertragungsverbindung beim Einschieben der Achse in das Ausfallende (3) in die Ausnehmung (9) einführbar oder eingeführt ist.

5. Fahrzeug mit Bremseinrichtung nach Anspruch 4,
**dadurch gekennzeichnet,**
**dass** die Ausnehmung (9) ausgehend von der Einführöffnung sich verengend, insbesondere sich keilförmig oder glockenkurvenförmig verengend, gestaltet ist.

6. Fahrzeug mit Bremseinrichtung nach Anspruch 4 oder 5,
**dadurch gekennzeichnet,**
**dass** die Ausnehmung (9) in ihrer Form derart an den Adapter (6) angepasst ist, dass ein nahezu spielfreier Eingriff zwischen dem Ausleger (4) und dem Adapter erreicht ist bzw. wird.

7. Fahrzeug mit Bremseinrichtung nach einem der Ansprüche 4 bis 6,
**dadurch gekennzeichnet,**
**dass** der Adapter (6) eine Führung (7) aufweist, in die ein die Ausnehmung (9) begrenzender Abschnitt des Auslegers passt.

8. Fahrzeug mit Bremseinrichtung nach Anspruch 7,
**dadurch gekennzeichnet,**
**dass** der Adapter (6) ein rotationssymmetrisches Teil ist, das die Führung (7) in Form einer umlaufenden Nut aufweist.

9. Fahrzeug mit Bremseinrichtung nach einem der vorhergehenden Ansprüche,
**dadurch gekennzeichnet,**
**dass** die Bremseinrichtung als Trommelbremse ausgeführt ist.

10. Fahrzeug mit Bremseinrichtung nach Anspruch 9,
**dadurch gekennzeichnet,**
**dass** die Trommelbremse an der Bremsträgerplatte (1) angeordnete Bremsbacken aufweist.

11. Verfahren zur Montage einer Bremseinrichtung an einem Fahrzeug, insbesondere einem Fahrrad, bei dem die Bremseinrichtung zusammen mit einer Nabe eines Laufrads des Fahrzeugs über eine Achse an einem Ausfallende (3) eines Rahmenteils (2) des
Fahrzeugs befestigt wird,
wobei ein an einer Bremsträgerplatte (1) der Bremseinrichtung angeordneter Ausleger (4) vermittels eines Verbindungsteils mit einem Befestigungsglied (5) am Rahmenteil (2) derart verbunden wird, dass eine beim Bremsen auftretende Bremsreaktionskraft von der Bremsträgerplatte (1) über den Ausleger (4) und das Befestigungsglied (5) auf das Rahmenteil (2) übertragbar ist,
**dadurch gekennzeichnet,**
**dass** zum Verbinden des Auslegers (4) mit dem Befestigungsglied (5) zuerst am Befestigungsglied (5) ein Adapter (6) als Verbindungsteil angebracht wird, und dass dann durch Einschieben der Achse in das Ausfallende (3) im Zuge der Montage des Laufrads am Rahmenteil (2) der Adapter (6) mit dem Ausleger (4) in die Bremsreaktionskraftübertragungsverbindung herstellenden Eingriff gebracht wird.

12. Verfahren nach Anspruch 11,
**dadurch gekennzeichnet,**
**dass** die Bremseinrichtung, bestehend aus der Bremsträgerplatte (1) und dem Ausleger (4), mit der Nabe des Laufrades und mit der Achse zuerst zu einer Baueinheit zusammengebracht wird und dann diese Baueinheit über das Einschieben der Achse in die Ausfallenden (3) am Fahrzeug angeordnet wird.

13. Verfahren nach Anspruch 11 oder 12,
**dadurch gekennzeichnet,**
**dass** der Adapter (6) an wenigstens einer der Bohrungen (8) des Befestigungsgliedes (5), vorzugsweise an der dem Ausfallende (3) näher gelegenen Bohrung (8) von zwei Bohrungen (8) des Befestigungsglieds (5) angebracht wird, das zur Befestigung eines Bremssattels einer Scheibenbremse geeignet ist

14. Verfahren nach einem der Ansprüche 11 bis 13,
**dadurch gekennzeichnet,**
**dass** der Ausleger (4) eine in ihrer Form dem Adapter (6) angepasste Ausnehmung (9) mit einer Einführöffnung aufweist,
wobei der Adapter zur formschlüssigen Herstellung der Bremsreaktionskraftübertragungsverbindung beim Einschieben der Achse in das Ausfallende (3) in die Ausnehmung (9) eingeführt wird.

15. Verfahren nach Anspruch 14,
**dadurch gekennzeichnet,**
**dass** die Ausnehmung (9) ausgehend von der Einführöffnung sich verengend, insbesondere sich keilförmig oder glockenkurvenförmig verengend, gestaltet ist

16. Verfahren nach Anspruch 14 oder 15,
**dadurch gekennzeichnet,**
**dass** die Ausnehmung (9) in ihrer Form derart an den Adapter (6) angepasst ist, dass ein nahezu spielfreier Eingriff zwischen dem Ausleger (4) und dem Adapter erreicht wird.

17. Verfahren nach einem der Ansprüche 14 bis 16,
**dadurch gekennzeichnet,**
**dass** der Adapter (6) eine Führung (7) aufweist, in die ein die Ausnehmung (9) begrenzender Abschnitt des Auslegers eingeführt wird.

18. Verfahren nach Anspruch 17,
**dadurch gekennzeichnet,**
**dass** der Adapter (6) ein rotationssysmmetrisches Teil ist, das die Führung (7) in Form einer umlaufenden Nut aufweist.

19. Verfahren nach einem der Ansprüche 11 bis 18,
**dadurch gekennzeichnet,**
**dass** das Fahrzeug mit der Bremseinrichtung nachgerüstet wird.

20. Verfahren nach einem der Ansprüche 11 bis 18,
**dadurch gekennzeichnet,**
**dass** das Fahrzeug im Sinne einer Erstausrüstung mit der Bremseinrichtung ausgestattet wird.

21. Verfahren nach einem der vorhergehenden Ansprüche,
**dadurch gekennzeichnet,**
**dass** die Bremseinrichtung als Trommelbremse ausgeführt ist.

22. Verfahren nach Anspruch 21,
**dadurch gekennzeichnet,**
**dass** die Trommelbremse an der Bremsträgerplatte (1) angeordnete Bremsbacken aufweist.

## Claims

1. Vehicle, in particular a bicycle, with a brake device assigned to a running wheel of the vehicle, a hub of the running wheel being fastened or able to be fastened together with the brake device to a drop-out end (3) of a frame part (2) of the vehicle via an axle, an extension arm (4) being arranged on a brake carrier plate (1) of the brake device and being connected or able to be connected to a fastening element (5) on the frame part (2) by means of a connecting part in such a way that a braking reaction force occurring during braking can be transferred from the brake carrier plate (1) to the frame part (2) via the extension arm (4) and the fastening element (5), **characterized in that**, to connect the extension arm (4) to the fastening element (5), an adapter (6) which is attached or can be attached to the fastening element (5) is provided as the connecting part and is designed in such a way that, by pushing the axle into the drop-out end (3) in the course of mounting the running wheel on the frame part (2), the adapter (6) is brought or can be brought into the engagement with the extension arm (4) that establishes the connection transferring the braking reaction force.

2. Vehicle with a brake device according to Claim 1, **characterized in that** the adapter (6) is arranged at at least one bore (8) of the fastening element (5), which is suitable for fastening a brake caliper of a disc brake.

3. Vehicle with a brake device according to Claim 2, **characterized in that** the fastening element (5) has two bores (8) , and **in that** the adapter (6) is arranged at the bore (8) of the fastening element (5) that is closer to the drop-out end (3).

4. Vehicle with a brake device according to one of the preceding claims, **characterized in that** the extension arm (4) has a recess (9), which is adapted in its shape to the adapter (6) and has an insertion opening, the adapter being insertable or inserted in the recess (9) to establish the positive connection transferring the braking reaction force when the axle is pushed into the drop-out end (3).

5. Vehicle with a brake device according to Claim 4, **characterized in that** the recess (9) is shaped such that it narrows from the insertion opening, in particular narrows in the form of a wedge or in the form of a bell-shaped curve.

6. Vehicle with a brake device according to Claim 4 or 5, **characterized in that** the recess (9) is adapted in its shape to the adapter (6) in such a way that a virtually play-free engagement is achieved between the extension arm (4) and the adapter.

7. Vehicle with a brake device according to one of Claims 4 to 6, **characterized in that** the adapter (6) has a guide (7) into which a portion of the extension arm delimiting the recess (9) fits.

8. Vehicle with brake device according to Claim 7, **characterized in that** the adapter (6) is a rotationally symmetrical part, which has the guide (7) in the form of a peripheral groove.

9. Vehicle with brake device according to one of the preceding claims, **characterized in that** the brake device is designed as a drum brake.

10. Vehicle with brake device according to Claim 9, **characterized in that** the drum brake has brake blocks arranged on the brake carrier plate (1).

11. Method of mounting a brake device on a vehicle, in particular a bicycle, in which the brake device is fastened together with a hub of a running wheel of the vehicle to a drop-out end (3) of a frame part (2) of the vehicle via an axle, an extension arm (4) arranged on a brake carrier plate (1) of the brake device being connected to a fastening element (5) on the frame part (2) by means of a connecting part in such a way that a braking reaction force occurring during braking can be transferred from the brake carrier plate (1) to the frame part (2) via the extension arm (4) and the fastening element (5), **characterized in that**, to connect the extension arm (4) to the fastening element (5), firstly an adapter (6) is attached to the fastening element (5) as the connecting part and **in that**, by pushing the axle into the drop-out end (3) in the course of mounting the running wheel on the frame part (2), the adapter (6) is brought into the engagement with the extension arm (4) that establishes the connection transferring the braking reaction force.

12. Method according to Claim 11, **characterized in that** the brake device, comprising the brake carrier plate (1) and the extension arm (4), is firstly brought together with the hub of the running wheel and with the axle to form a structural unit and then this structural unit is arranged on the vehicle by pushing the axle into the drop-out ends (3).

13. Method according to Claim 11 or 12, **characterized in that** the adapter (6) is attached at at least one of the bores (8) of the fastening element (5), preferably at the bore (8) closer to the drop-out end (3) of two bores (8) of the fastening element (5), which is suitable for fastening a brake caliper of a disc brake.

14. Method according to one of Claims 11 to 13, **characterized in that** the extension arm (4) has a recess (9), which is adapted in its shape to the adapter (6) and has an insertion opening, the adapter being inserted in the recess (9) to establish the positive connection transferring the braking reaction force when the axle is pushed into the drop-out end (3).

15. Method according to Claim 14, **characterized in that** the recess (9) is shaped such that it narrows from the insertion opening, in particular narrows in the form of a wedge or in the form of a bell-shaped curve.

16. Method according to Claim 14 or 15, **characterized in that** the recess (9) is adapted in its shape to the adapter (6) in such a way that a virtually play-free engagement is achieved between the extension arm (4) and the adapter.

17. Method according to one of Claims 14 to 16, **characterized in that** the adapter (6) has a guide (7) into which a portion of the extension arm delimiting the recess (9) is inserted.

18. Method according to Claim 17, **characterized in that** the adapter (6) is a rotationally symmetrical part, which has the guide (7) in the form of a peripheral groove.

19. Method according to one of Claims 11 to 18, **characterized in that** the vehicle is retrofitted with the brake device.

20. Method according to one of Claims 11 to 18, **characterized in that** the vehicle is equipped with the brake device when it is initially fitted out.

21. Method according to one of the preceding claims, **characterized in that** the brake device is designed as a drum brake.

22. Method according to Claim 21, **characterized in that** the drum brake has brake blocks arranged on the brake carrier plate (1).

## Revendications

1. Véhicule, en particulier bicyclette, comportant un dispositif de freinage associé à une roue du véhicule, un moyeu de la roue étant fixé ou pouvant être fixé conjointement avec le dispositif de freinage par l'intermédiaire d'un essieu sur une patte d'extrémité (3) d'une partie de cadre (2) du véhicule, un bras (4) étant disposé sur une plaque de support de frein (1) du dispositif de freinage, lequel est raccordé ou peut être raccordé à la partie de cadre (2) au moyen d'un élément de raccordement avec un organe de fixation (5) de telle sorte qu'une force de réaction de freinage survenant à l'occasion du freinage peut être transmise de la plaque de support de frein (1) à la partie de cadre (2) par l'intermédiaire du bras (4) et de l'organe de fixation (5), **caractérisé en ce que** pour le raccordement du bras (4) à l'organe de fixation (5) un adaptateur (6) monté ou devant être monté sur l'organe de fixation (5) est prévu en tant qu'élément de raccordement, lequel est configuré de telle sorte que par l'introduction de l'essieu dans la patte d'extrémité (3) au cours du montage de la roue sur la partie de cadre (2) l'adaptateur (6) est mis en prise ou peut être mis en prise avec le bras (4) pour l'établissement du raccordement de transmission de la force de réaction de freinage.

2. Véhicule comportant un dispositif de freinage selon la revendication 1, **caractérisé en ce que** l'adaptateur (6) est disposé à au moins un alésage (8) de l'organe de fixation (5), qui est approprié à la fixation d'un étrier d'un frein à disque.

3. Véhicule comportant un dispositif de freinage selon la revendication 2, **caractérisé en ce que** l'organe de fixation (5) comporte au moins deux alésages (8), et que l'adaptateur (6) est disposé à l'alésage (8) de l'organe de fixation (5) situé le plus près de la patte d'extrémité (3).

4. Véhicule comportant un dispositif de freinage selon l'une quelconque des revendications précédentes, **caractérisé en ce que** le bras (4) comporte un creux (9) dont la forme est adaptée à l'adaptateur (6) avec un orifice d'introduction, l'adaptateur pouvant être introduit ou étant introduit dans le creux (9) pour l'établissement du raccordement de transmission de la force de réaction de freinage à engagement positif lors de l'introduction de l'essieu dans la patte d'extrémité (3).

5. Véhicule comportant un dispositif de freinage selon la revendication 4, **caractérisé en ce que** le creux (9) est configuré avec un rétrécissement à partir de l'orifice d'introduction, en particulier avec un rétrécissement en forme de coin ou en forme de courbe en cloche.

6. Véhicule comportant un dispositif de freinage selon la revendication 4 ou 5, **caractérisé en ce que** la forme du creux (9) est adaptée à l'adaptateur (6) de telle sorte qu'une prise pratiquement sans jeu entre le bras (4) et l'adaptateur est obtenue et/ou le sera.

7. Véhicule comportant un dispositif de freinage selon l'une quelconque des revendications 4 à 6, **caractérisé en ce que** l'adaptateur (6) comporte un guidage (7) dans lequel tient place une section du bras délimitant le creux (9).

8. Véhicule comportant un dispositif de freinage selon la revendication 7, **caractérisé en ce que** l'adaptateur (6) est un élément à symétrie de révolution qui comporte le guidage (7) sous forme d'une rainure périphérique.

9. Véhicule comportant un dispositif de freinage selon l'une quelconque des revendications précédentes, **caractérisé en ce que** le dispositif de freinage est configuré sous forme de frein à tambour.

10. Véhicule comportant un dispositif de freinage selon la revendication 9, **caractérisé en ce que** le frein à tambour comporte des mâchoires de frein disposées sur la plaque de support de frein (1).

11. Procédé pour le montage d'un dispositif de freinage sur un véhicule, en particulier une bicyclette dans lequel le dispositif de freinage est fixé conjointement avec un moyeu d'une roue par l'intermédiaire d'un essieu sur une patte d'extrémité (3) d'une partie de cadre (2) du véhicule, un bras (4) disposé sur une plaque de support de frein (1) du dispositif de freinage étant raccordé à la partie de cadre (2) au moyen d'un élément de raccordement avec un organe de fixation (5), de telle sorte qu'une force de réaction de freinage survenant à l'occasion du freinage peut être transmise de la plaque de support de frein (1) à la partie de cadre (2) par l'intermédiaire du bras (4) et de l'organe de fixation (5), **caractérisé en ce que** pour le raccordement du bras (4) avec l'organe de fixation (5) un adaptateur (6) doit en premier lieu être monté sur l'organe de fixation (5) en tant qu'élément de raccordement et que par l'introduction de l'essieu dans l'patte d'extrémité (3) au cours du montage de la roue sur la partie de cadre (2) l'adaptateur (6) est ensuite mis en prise avec le bras (4) pour l'établissement du raccordement de transmission de la force de réaction de freinage.

12. Procédé selon la revendication 11, **caractérisé en ce que** le dispositif de freinage, constitué de la plaque de support de frein (1) et du bras (4) est dans un premier temps assemblé avec le moyeu de la roue et avec l'essieu pour former une unité constructive et **en ce que** cette unité constructive est ensuite montée sur le véhicule par introduction de l'essieu dans la patte d'extrémité (3).

13. Procédé selon la revendication 11 ou 12, **caractérisé en ce que** l'adaptateur (6) est disposé à au moins un des alésages (8) de l'organe de fixation (5), de préférence à celui des deux alésages (8) de l'organe de fixation (5) situé le plus près de la patte d'extrémité (5), lequel organe est approprié pour la fixation d'un étrier d'un frein à disque.

14. Procédé selon l'une quelconque des revendications 11 à 13, **caractérisé en ce que** le bras (4) comporte un creux (9) dont la forme est adaptée à l'adaptateur (6) avec un orifice d'introduction, l'adaptateur étant introduit dans le creux (9) pour l'établissement du raccordement de transmission de la force de réaction de freinage à engagement positif lors de l'introduction de l'essieu dans la patte d'extrémité (3).

15. Procédé selon la revendication 14, **caractérisé en ce que** le creux (9) est configuré avec un rétrécissement à partir de l'orifice d'introduction, en particulier avec un rétrécissement en forme de coin ou en forme de courbe en cloche.

16. Procédé selon la revendication 14 ou 15, **caractérisé en ce que** la forme du creux (9) est adaptée à l'adaptateur (6) de telle sorte qu'une prise pratiquement sans jeu entre le bras (4) et l'adaptateur est obtenue.

17. Procédé selon l'une quelconque des revendications 14 à 16, **caractérisé en ce que** l'adaptateur (6) comporte un guidage (7) dans lequel est introduit une section du bras délimitant le creux (9).

18. Procédé selon la revendication 17, **caractérisé en ce que** l'adaptateur (6) est un élément à symétrie de révolution qui comporte le guidage (7) sous forme d'une rainure périphérique.

19. Procédé selon l'une quelconque des revendications 11 à 18, **caractérisé en ce que** le véhicule est équipé après coup du dispositif de freinage.

20. Procédé selon l'une quelconque des revendications 11 à 18, **caractérisé en ce que** le véhicule est doté du dispositif de freinage au sens d'un équipement d'origine.

21. Procédé selon l'une quelconque des revendications précédentes, **caractérisé en ce que** le dispositif de freinage est configuré sous forme de frein à tambour.

22. Procédé selon la revendication 21, **caractérisé en ce que** le frein à tambour comporte des mâchoires de frein disposées sur la plaque de support de frein (1).
